(19) Europäisches Patentamt
European Patent Office
Office européen des brevets

(11) EP 4 745 119 A1

(12) EUROPEAN PATENT APPLICATION
published in accordance with Art. 153(4) EPC

(43) Date of publication:
**20.05.2026 Bulletin 2026/21**

(21) Application number: **24856830.5**

(22) Date of filing: **22.08.2024**

(51) International Patent Classification (IPC):
***C07C 263/18*** (2006.01) ***C07C 265/14*** (2006.01)
***B65D 6/00*** (2006.01) ***C08G 18/76*** (2006.01)
***G02B 1/04*** (2006.01) ***C08G 18/08*** (2006.01)
***C08G 18/72*** (2006.01) ***C08K 5/435*** (2006.01)

(52) Cooperative Patent Classification (CPC):
**B65D 7/00; C07C 263/18; C07C 265/14; C08G 18/08; C08G 18/72; C08G 18/76; C08K 5/435; G02B 1/04**

(86) International application number:
**PCT/KR2024/012523**

(87) International publication number:
**WO 2025/042219 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 KR 20230110696**
**21.08.2024 KR 20240112100**

(71) Applicant: **Hanwha Solutions Corporation**
**Jung-gu**
**Seoul 04541 (KR)**

(72) Inventors:
- **SIM, Yujin**
  **Daejeon 34128 (KR)**
- **WOO, Eun Ji**
  **Daejeon 34128 (KR)**
- **KIM, Jiyeon**
  **Daejeon 34128 (KR)**
- **KWON, Dowoo**
  **Daejeon 34128 (KR)**
- **KIM, Jong Jin**
  **Daejeon 34128 (KR)**

(74) Representative: **Berggren Oy**
**P.O. Box 16**
**Fabianinkatu 21**
**00101 Helsinki (FI)**

# (54) ISOCYANATE COMPOSITION

(57) The present invention relates to an isocyanate composition with improved storage stability to suppress the occurrence of clouding.

EP 4 745 119 A1

## Description

[Technical Field]

Cross-reference to related application(s)

This application claims the benefit of priority to Korean Patent Application No. 10-2023-0110696, filed on August 23, 2023, and Korean Patent Application No. 10-2024-0112100, filed on August 21, 2024. The entire disclosures of these Korean patent applications are incorporated herein by reference.

The present invention relates to an isocyanate composition having improved storage stability and suppressed occurrence of discoloration and clouding.

[Background Art]

Isocyanate-based compounds are compounds that have high utility value not only in the chemical and resin industries but also as fine chemical products, including optical materials. Xylylene diisocyanate (hereinafter, XDI), a representative example of an isocyanate-based compound, is used as a raw material for high-grade optical lenses, and its demand as a high value-added chemical material is increasing.

The isocyanate-based compound is used as a raw material for polyurethane in various applications such as coatings, pressure-sensitive adhesives, adhesives, paints, foams, and optical materials. Because it exhibits high reactivity, it easily discolors or becomes cloudy by reacting with moisture in the atmosphere during storage.

In the case of manufacturing a polyurethane lens using an isocyanate-based compound in which the discoloration or clouding phenomenon has occurred as described above, there are problems in that workability is lowered due to a decrease in stirring power, an increase in filter time, filter clogging, etc. caused by a rapid increase in the molecular weight of the polymerization liquid, and transparency of the manufactured lens is lowered and discoloration occurs.

To solve this, a method of manufacturing and storing by filling or sealing with nitrogen gas to block air is used, but there is still a concern of discoloration and clouding until the isocyanate-based compound is completely exhausted.

Accordingly, a method of improving the storage stability of isocyanate-based compounds by incorporating a phenolic stabilizer or adding a chlorine-based material has been proposed; however, these additives either caused discoloration during subsequent product manufacturing or failed to provide sufficient stability to the desired level.

Typically, an isocyanate composition is stored and transported in a metal container made of a metal material, and due to the high acidity of the isocyanate-based compound, metal ions of the container are easily eluted, and accordingly, by promoting self-polymerization to form an oligomer of a dimer or higher, discoloration or clouding occurs.

In Korean Patent Publication No. 10-2022-0054849, to solve this problem, when an isocyanate composition is stored in a metal container, the containers are classified according to acidity, and if the acidity is 15 ppm or more, a method of using a separate resin layer coated on the container is selected, which has a problem of poor economic efficiency.

Therefore, there is a need to study the preparation of an isocyanate composition which, thanks to improved storage stability, can be stored long-term in metal containers without risk of discoloration or white cloudiness regardless of its acidity, and which also exhibits excellent transparency when used to manufacture optical articles such as lenses.

[Detailed Description of the Invention]

[Technical Problem]

An object of the present invention is to provide an isocyanate composition that has improved storage stability to suppress the occurrence of discoloration or clouding even when stored in a metal container for a long period of time, and accordingly, can improve transparency when applied to a product.

[Technical Solution]

In order to solve the above problems, according to one embodiment of the present invention, an isocyanate composition comprising: an isocyanate-based compound; an aromatic sulfonamide-based antioxidant represented by the following Formula 1; and a phenolic antioxidant is provided:

[Chemical Formula 1]

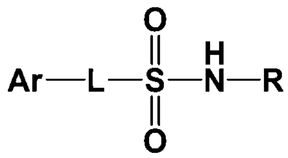

In Chemical Formula 1, L is a single bond or a substituted or unsubstituted $C_{1-20}$ alkylene, Ar is a substituted or unsubstituted $C_{6-60}$ aryl, and R is hydrogen, deuterium, a substituted or unsubstituted $C_{1-60}$ alkyl, a substituted or unsubstituted $C_{1-60}$ alkenyl, a substituted or unsubstituted $C_{3-60}$ cycloalkyl, a substituted or unsubstituted $C_{6-60}$ aryl, a substituted or unsubstituted benzyl, a substituted or unsubstituted $C_{1-60}$ alkylcarbamoyl, or a substituted or unsubstituted $C_{1-60}$ alkoxycarbonyl.

In addition, according to another embodiment of the invention, a metal container for storing an isocyanate composition, comprising the above-described isocyanate composition, is provided.

In addition, according to another embodiment of the invention, a composition for polyisocyanate polymerization comprising the above-described isocyanate composition; and any one or more multi-functional monomer compound among a multi-functional thiol-based compound, a multi-functional alcohol-based compound, and a multi-functional episulfide-based compound is provided.

In addition, according to another embodiment of the invention, a polyisocyanate composition is provided which comprises a polyisocyanate obtained by polymerizing the above-described isocyanate composition and a multifunctional alcohol-based compound.

In addition, according to another embodiment of the invention, a polyisocyanate composition is provided which comprises a polyisocyanate obtained by polymerizing the above-described isocyanate composition with a multi-functional thiol-based compound or with a multi-functional episulfide-based compound.

In addition, according to another embodiment of the invention, an article, comprising a polymer obtained by polymerizing the above-described isocyanate composition with one or more multifunctional monomers selected from a multifunctional thiol-based compound, a multifunctional alcohol-based compound, and a multifunctional episulfide-based compound, is provided.

[Advantageous Effects]

The isocyanate composition according to the present invention has improved storage stability to suppress the occurrence of discoloration or clouding even when stored in a metal container for a long period of time, and as a result, can improve (maintain) transparency when applied to a product.

In addition, a polymer prepared by polymerizing the isocyanate composition with a multi-functional monomer exhibits excellent transparency, and is useful for manufacturing an article such as an optical pressure-sensitive adhesive, an optical adhesive, an optical coating agent, or an optical lens.

[Detailed Description of the Embodiments]

The terms used in this specification are used solely to describe exemplary embodiments and are not intended to limit the present invention. Singular expressions include plural expressions unless the context clearly indicates otherwise. In this specification, the terms "comprising," "including," or "having" are intended to denote the presence of the recited features, steps, components, or combinations thereof and should be understood not to preclude the presence or addition of one or more other features, steps, components, or combinations thereof.

Since the present invention is subject to various modifications and can take various forms, specific embodiments are illustrated and described in detail below. However, this should not be construed as limiting the present invention to those particular embodiments; rather, it should be understood to include all modifications, equivalents, and alternatives falling within the spirit and scope of the present invention.

Hereinafter, the present invention will be described in detail.

An isocyanate-based compound or an adduct thereof is refrigerated in a state filled with nitrogen after production and completely sealed due to high reactivity with moisture or alcohol. However, when opened for use, it reacted with moisture in the atmosphere, or a discoloration or clouding phenomenon occurred according to the atmospheric temperature. Also, when the isocyanate-based compound or an adduct thereof stored in a sealed state was opened and used, the oligomer content increased or a yellowing phenomenon occurred during the storage time until it was exhausted.

In addition, typically, it is stored for a long period of time in a storage container made of a metal material for ease of storage, but in this case, metal ions are easily eluted due to the high acidity of the isocyanate-based compound, and accordingly, by promoting self-polymerization to form a dimer or higher oligomers, there was a problem that discoloration

or clouding increased.

When a polyurethane lens is manufactured using such an isocyanate-based compound, workability is lowered due to a decrease in stirring power, an increase in filter time, or filter clogging caused by a rapid increase in the viscosity of the composition, and transparency of the manufactured lens is lowered and discoloration occurred.

Accordingly, the present inventors have studied an isocyanate composition that can suppress an increase in viscosity and occurrence of discoloration/clouding by improving the storage stability of a diisocyanate-based compound, and as a result, confirmed that by using an aromatic sulfonamide-based antioxidant of a specific structure and a phenolic antioxidant together, the oligomerization reaction of the isocyanate compound can be suppressed and an increase in the viscosity of the isocyanate composition caused by the oligomer can be suppressed. In particular, it was confirmed that even when stored in a metal container for a long period of time, discoloration and clouding can be suppressed, and accordingly, excellent transparency can be implemented when applied to a final product, and the present invention was completed.

Isocyanate composition

An isocyanate composition according to one embodiment of the invention comprises: an isocyanate-based compound; an aromatic sulfonamide-based antioxidant represented by Chemical Formula 1; and a phenolic antioxidant.

The isocyanate composition comprises an isocyanate-based compound, which refers to a compound comprising at least one isocyanate groups (NCO groups) in the molecule.

Specific examples of the isocyanate-based compound include aromatic diisocyanates such as para-phenylene diisocyanate, tolylene diisocyanate (TDI), naphthalene diisocyanate (NDI), 4,4'-diphenylmethane diisocyanate (4,4'-MDI), 2,4'-diphenylmethane diisocyanate (2,4'-MDI), and tolidine diisocyanate (TODI); aliphatic diisocyanates such as tetramethylene diisocyanate, hexamethylene diisocyanate (HDI), trimethylhexamethylene diisocyanate (TMHDI), lysine diisocyanate, norbornane diisocyanate (NBDI), and octadecyl diisocyanate; alicyclic diisocyanates such as trans-cyclohexane-1,4-diisocyanate, isophorone diisocyanate (IPDI), and dicyclohexylmethane diisocyanate (H12MDI); aryl aliphatic diisocyanates such as xylylene diisocyanate (XDI), hydrogenated xylylene diisocyanate (HXDI), and tetramethylxylylene diisocyanate (TMXDI); or modified isocyanates of each of the above isocyanates. One of these may be used alone or two or more types may be used in combination.

Among these, aliphatic diisocyanates, more specifically, xylylene diisocyanates such as o-xylylene diisocyanate, m-xylylene diisocyanate, and p-xylylene diisocyanate can be preferably used.

The isocyanate composition comprises an aromatic sulfonamide-based antioxidant represented by Chemical Formula 1.

Generally, discoloration and cloudiness in an isocyanate composition are caused by oligomerization of the isocyanate, quinoid formation of the intramolecular benzene ring, or by-products generated by side reactions due to oxygen, moisture, or high heat during the synthesis and purification processes.

The aromatic sulfonamide-based antioxidant of Chemical Formula 1 delays the rate of the oligomerization reaction of isocyanate and, when used in combination with a phenolic antioxidant to be described later, suppresses the side reactions by a radical scavenging reaction, thereby preventing coloring, discoloration, and clouding of the isocyanate composition.

Hereinafter, the specific structure of Chemical Formula 1 is as follows:

[Chemical Formula 1]

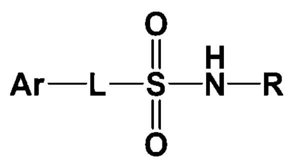

In Chemical Formula 1, L is a single bond or a substituted or unsubstituted $C_{1-20}$ alkylene, Ar is a substituted or unsubstituted $C_{6-60}$ aryl, and R is hydrogen, deuterium, a substituted or unsubstituted $C_{1-60}$ alkyl, a substituted or unsubstituted $C_{1-60}$ alkenyl, a substituted or unsubstituted $C_{3-60}$ cycloalkyl, a substituted or unsubstituted $C_{6-60}$ aryl, a substituted or unsubstituted benzyl, a substituted or unsubstituted $C_{1-60}$ alkylcarbamoyl, or a substituted or unsubstituted $C_{1-60}$ alkoxycarbonyl.

Here, the term "substituted or unsubstituted" means unsubstituted or substituted with at least one substituent selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl

group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; an acetyl group; an acetamino group; or a heterocyclic group comprising one or more of N, O, and S atoms, or unsubstituted or substituted with in which two or more substituents among the substituents exemplified above are connected.

The Ar is phenyl, biphenylyl, terphenylyl, naphthyl, anthracenyl, phenanthrenyl, pyrenyl, diphenylfluorenyl, or dimethylfluorenyl, each of which is unsubstituted or substituted with $C_{1-10}$ alkyl, acetyl, amino, or acetamido.

The L is a single bond or $C_{1-10}$ alkylene, and preferably a single bond or methylene.

The R is hydrogen, deuterium, $C_{1-10}$ alkyl, $C_{3-30}$ cycloalkyl, $C_{1-10}$ alkylcarbamoyl, $C_{1-10}$ alkoxycarbonyl, benzyl, or allyl, and preferably, hydrogen, methyl, ethyl, propyl, butyl, cyclohexyl, benzyl, allyl, tert-butoxycarbonyl, or butylcarbamoyl.

Preferably, the aromatic sulfonamide-based antioxidant may comprise at least one selected from the group consisting of benzenesulfonamide, p-toluenesulfonamide, o-toluenesulfonamide, N-methyl-p-toluenesulfonamide, N-ethyl-p-toluenesulfonamide, N-butyl-p-toluenesulfonamide, N-benzyl-p-toluenesulfonamide, N-cyclohexyl-p-toluenesulfonamide, N-allyl-p-toluenesulfonamide, N-(tert-butoxycarbonyl)-p-toluenesulfonamide, naphthalene-1-sulfonamide, naphthalene-2-sulfonamide, 4-acetamidobenzenesulfonamide, benzylsulfonamide, 4-acetylbenzenesulfonamide, and 3-aminobenzenesulfonamide.

The aromatic sulfonamide-based antioxidant may be comprised in an amount of 10 to 3,000 ppmw based on the total weight of the isocyanate-based compound.

If the amount of the aromatic sulfonamide-based antioxidant is too low, it is difficult to achieve a sufficient effect in preventing discoloration or cloudiness; conversely, if it is present in an excessive amount above a certain level, the antioxidant itself may become colored and cost-effectiveness is reduced. Accordingly, by including the aromatic sulfonamide-based antioxidant within the above-described content range, an optimal synergistic effect with the phenolic antioxidant to be described later can be achieved, thereby providing an enhanced inhibition of staining, discoloration, and cloudiness.

Preferably, the aromatic sulfonamide-based antioxidant may be comprised in an amount of 30 ppmw or more, 50 ppmw or more, 80 ppmw or more, 100 ppmw or more, or 2,800 ppmw or less, 2,500 ppmw or less, 2,300 ppmw or less, based on the total weight of the diisocyanate-based compound.

The isocyanate composition comprises a phenolic antioxidant.

The phenolic antioxidant delays the rate of the oligomerization reaction of isocyanate and, when used in combination with the above-described aromatic sulfonamide-based antioxidant, suppresses the side reactions by a radical scavenging reaction, thereby preventing coloring and discoloration and clouding of the isocyanate composition.

Preferably, the phenolic antioxidant may comprise at least one selected from the group consisting of phenol, 4-methoxyphenol, dibutylhydroxytoluene (BHT), 2-tert-butyl-4-methoxyphenol, 3-tert-butyl-4-methoxyphenol, 4-tert-butylbenzene-1,2-diol, propyl-3,4,5-trihydroxybenzoate, 3,5-di-tert-butyl-4-hydroxyphenylpropionate, 2-tert-butylbenzene-1,4-diol, 2,5-di-tert-butylbenzene-1,4-diol, octadecyl-3-[3,5-di-tert-butyl-4-hydroxyphenyl]propionate, 2-[1-(2-hydroxy-3,5-di-tert-pentylphenyl)ethyl]-4,6-di-tert-pentylphenyl acrylate, and 6-[3-(3-tert-butyl-4-hydroxy-5-methylphenyl)propoxy]-2,4,8,10-tetra-tert-butyldibenzo[d,f][1,3,2]dioxaphosphepin.

The phenolic antioxidant may be comprised in an amount of 10 to 2,000 ppmw based on the total weight of the isocyanate-based compound.

If the content of the phenolic antioxidant is too low, it is difficult to achieve a sufficient turbidity-reduction effect; conversely, if it is present in an amount exceeding a certain level, the antioxidant itself may become a source of coloration and turbidity. Accordingly, by including the phenolic antioxidant within the above-described amount range, optimal synergy with the aforementioned aromatic sulfonamide-based antioxidant can be realized, thereby further enhancing the suppression of coloration, discoloration, and turbidity.

Preferably, the phenolic antioxidant may be comprised in an amount of 20 ppmw or more, 25 ppmw or more, or 30 ppmw or more, or 1,800 ppmw or less, 1,500 ppmw or less, 1,300 ppmw or less, 1,000 ppmw or less, based on the total weight of the diisocyanate-based compound.

On the other hand, according to another embodiment of the invention, the isocyanate composition may include additional additives or the like within a range that does not diminish the intended effect of the invention. Such additional additives may be employed without special limitation so long as they are conventionally used in the art.

Through the use of an optimally formulated antioxidant combination, the isocyanate composition of the present invention can effectively suppress the formation of oligomers and other by-products, thereby controlling increases in viscosity, discoloration, and the onset of cloudiness both immediately after production and thereafter.

The isocyanate composition may have an APHA value of 20 or less measured after storage in a metal container for 6 months, and preferably 19 or less, or 18 or less. The lower limit of the APHA value depends on the APHA value of the initial isocyanate composition before storage, and may preferably be 5 or more. The measurement method of the APHA value follows ASTM D1209, and will be described more specifically in the experimental examples to be described later.

The isocyanate composition may have a haze value of 1 or less measured after storage in a metal container for 6

months, and preferably 0.9 or less, or 0.8 or less. The lower limit of the haze value depends on the haze value of the initial isocyanate composition before storage, and may preferably be 0.1 or more or 0.2 or more. The haze value may be measured after the isocyanate composition is put into a metal container and filled with nitrogen, and the temperature of the composition in the metal container is maintained at about 15°C, but it is not limited thereto. The measurement method of the haze value follows ASTM D1003, and will be described more specifically in the experimental examples to be described later.

The isocyanate composition may have an oligomer content of 2% or less according to gel permeation chromatography analysis measured after storage in a metal container for 6 months, and preferably 1.8% or less, or 1.5% or less. The measurement method of the oligomer content will be described more specifically in the experimental examples to be described later.

Metal container for storage of isocyanate composition

According to one embodiment of the invention, a metal container for storing the above-described isocyanate composition is provided. Specifically, a metal container comprising the above-described isocyanate composition is provided.

The type of the metal container is not particularly limited, and for example, an aluminum container, a stainless steel container, a carbon steel container, a tinplate steel container, a tin-free chromium-plated container, a tin-free steel container, etc. may be mentioned, but it is not limited thereto.

The metal container, due to the isocyanate composition comprising the optimally combined antioxidant, suppresses the occurrence of oligomers of isocyanate compounds or other by-products in the container even when stored for a long period of time and accordingly, long-term storage is possible without an increase in viscosity of the isocyanate composition and occurrence of discoloration and clouding.

Manufacturing method of isocyanate composition

The above-described isocyanate composition may be manufactured by mixing an isocyanate-based compound, an aromatic sulfonamide-based antioxidant, a phenolic antioxidant, and additional additives as needed.

At this time, the order and method of adding the aromatic sulfonamide-based antioxidant and the phenolic antioxidant are not particularly limited. To the isocyanate-based compound, the phenolic antioxidant may be added after the addition of the aromatic sulfonamide-based antioxidant, or the aromatic sulfonamide-based antioxidant may be added after the addition of the phenolic antioxidant. Alternatively, after mixing the aromatic sulfonamide-based antioxidant and the phenolic antioxidant first, they may be added to the isocyanate-based compound.

The mixing may be performed according to a conventional mixing method.

Composition for polyisocyanate polymerization

According to one embodiment of the invention, provided is a composition for polyisocyanate polymerization comprising, together with the above-described isocyanate composition, one or more multifunctional monomer compounds selected from multifunctional alcohol-based compounds, multifunctional thiol-based compounds, and multifunctional episulfide-based compounds.

Preferably, the composition for polymerization may comprise the isocyanate composition and the multi-functional monomer compound in a mixed state, or may comprise them in a state separated from each other. That is, in the composition for polymerization, the isocyanate composition and the multi-functional monomer compound may be in a state of being blended in contact with each other, or may be in a state of being separated so as not to contact each other.

The multi-functional alcohol-based compound is a compound comprising two or more hydroxy groups (-OH) in one molecule, specifically, it may be a compound having 2 or more, or 3 or more, and 8 or less, or 4 or less hydroxy groups in the molecule. Specific examples include dihydric alcohols such as ethylene glycol, diethylene glycol, triethylene glycol, 1,2-propanediol, 1,3-propanediol, 1,2-butanediol, 2-methyl-2,3-butanediol, 1,6-hexanediol, 1,2-hexanediol, polypropylene glycol, poly tetramethylene ether glycol, ethylene oxide-propylene oxide block copolymer, poly alkylene carbonate diol, and poly caprolactone diol; trihydric alcohols such as glycerol, trimethylolethane, and trimethylolpropane (TMP); tetrahydric alcohols such as diglycerin, ditrimethylolpropane, pentaerythritol, and dipentaerythritol; pentahydric alcohols such as L-arabinitol, ribitol, and xylitol; hexahydric alcohols such as D-glucitol, D-mannitol, and galactitol; heptahydric alcohols such as trehalose; octahydric alcohols such as sucrose and maltose, or polyols, and any one or a mixture of two or more of these may be used.

The multi-functional thiol-based compound is a compound which contains at least two thiol groups (-SH) per molecule. More specifically, it may be a compound having 2 to 8, or 3 to 5, thiol groups per molecule.

The multi-functional thiol-based compound may be, for example, at least one selected from the group consisting

of 2,3-bis(2-sulfanylethylsulfanyl)propane-1-thiol, 1,9-dimercapto-3,7-dithianonane, 1,13-dimercapto-3,7,11-trithiatridecane, glycol di(3-mercaptopropionate), 1,4-dithiane-2,5-diyldimethanethiol, 2-mercaptomethyl-1,5-dimercapto-3-thiapentane, trimethylolpropane tri(3-mercaptopropionate), 4,8-di(mercaptomethyl)-1,11-dimercapto-3,6,9-trithiaundecane, 5,9-di(mercaptoethyl)-1,12-dimercapto-3,7,10-trithiadodecane, pentaerythritol tetra(3-mercaptopropionate), pentaerythritol tetra(mercaptoacetate), 3,6,9,12-tetrathiatetradecane-1,14-dithiol, and 3,6,10,13-tetrathiapentadecane-1,8,15-trithiol.

Specifically, the polythiol may be added such that the molar ratio of thiol groups in the polythiol to the isocyanate groups of the isocyanate compound is 0.8 to 1.1, or alternatively 0.9 to 1.0, based on one mole of isocyanate groups. If this molar ratio falls below 0.8, excess isocyanate groups lower the viscosity of the resulting polymer, which may impair processability. Further, if the molar ratio exceeds 1.1, excess thiol groups may reduce the discoloration-inhibition effect.

The multi-functional episulfide-based compound may be a compound comprising two or more episulfide groups, i.e., thioepoxy groups, in the molecule, and may have an aliphatic, alicyclic, or aromatic skeleton. According to an example, the multi-functional episulfide-based compound is bis(β-epithiopropylthio)methane, 1,2-bis(β-epithiopropylthio)ethane, 1,3-bis(β-epithiopropylthio)propane, 1,2-bis(β-epithiopropylthio)propane, 1-(β-epithiopropylthio)-2-(β-epithiopropylthiomethyl)propane, 1,4-bis(β-epithiopropylthio)butane, 1,3-bis(β-epithiopropylthio)butane, 1-(β-epithiopropylthio)-3-(β-epithiopropylthiomethyl)butane, 1,5-bis(β-epithiopropylthio)pentane, 1-(β-epithiopropylthio)-4-(β-epithiopropylthiomethyl)pentane, 1,6-bis(β-epithiopropylthio)hexane, 1-(β-epithiopropylthio)-5-(β-epithiopropylthiomethyl)hexane, 1-(β-epithiopropylthio)-2-[(2-β-epithiopropylthioethyl)thio]ethane, 1-(β-epithiopropylthio)-2-[[2-(2-β-epithiopropylthioethyl)thioethyl]thio]ethane, tetrakis(β-epithiopropylthiomethyl)methane, 1,1,1-tris(β-epithiopropylthiomethyl)propane, 1,5-bis(β-epithiopropylthio)-2-(β-epithiopropylthiomethyl)-3-thiapentane, 1,5-bis(β-epithiopropylthio)-2,4-bis(β-epithiopropylthiomethyl)-3-thiapentane, 1-(β-epithiopropylthio)-2,2-bis(β-epithiopropylthiomethyl)-4-thiahexane, 1,5,6-tris(β-epithiopropylthio)-4-(β-epithiopropylthiomethyl)-3-thiahexane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,8-bis(β-epithiopropylthio)-2,5-bis(β-epithiopropylthiomethyl)-3,6-dithiaoctane, 1,9-bis(β-epithiopropylthio)-5-(β-epithiopropylthiomethyl)-5-[(2-β-epithiopropylthioethyl)thiomethyl]-3,7-dithianonane, 1,10-bis(β-epithiopropylthio)-5,6-bis[(2-β-epithiopropylthioethyl)thio]-3,6,9-trithiadecane, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiaundecane, 1,11-bis(β-epithiopropylthio)-4,7-bis(β-epithiopropylthiomethyl)-3,6,9-trithiaundecane, 1,3-bis(β-epithiopropylthio)cyclohexane, 1,4-bis(β-epithiopropylthio)cyclohexane, 1,3-bis(β-epithiopropylthiomethyl)cyclohexane, 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane, bis[4-(β-epithiopropylthio)cyclohexyl] sulfide, 2,5-bis(β-epithiopropylthiomethyl)-1,4-dithiane, 2,5-bis(β-epithiopropylthioethylthiomethyl)-1,4-dithiane, 1,3-bis(β-epithiopropylthio)benzene, 1,4-bis(β-epithiopropylthio)benzene, 1,3-bis(β-epithiopropylthiomethyl)benzene, 1,4-bis(β-epithiopropylthiomethyl)benzene, bis[4-(β-epithiopropylthio)phenyl]methane, 2,2-bis[4-(β-epithiopropylthio)phenyl]propane, bis[4-(β-epithiopropylthio)phenyl] sulfide, bis[4-(β-epithiopropylthio)phenyl] sulfone, and 4,4'-bis(β-epithiopropylthio)biphenyl may be comprising at least one selected therefrom.

The polymerization composition may, as needed and within a range that does not diminish the effects intended by the invention, further include additives such as an internal release agent, an ultraviolet absorber, a urethane-reaction catalyst, a polymerization initiator, a thermal stabilizer, a color-correcting agent, a chain extender, a crosslinking agent, a light stabilizer, a filler, a photosensitizer, and the like. The contents of these additives can be appropriately determined within a range that does not impair the composition's discoloration and discoloration-inhibiting properties.

The above-described polymerization composition can control the generation of cloudiness by delaying or suppressing the reaction rate and oligomerization of the isocyanate, thanks to the combination of two types of antioxidants contained in the isocyanate composition.

Polyisocyanate composition

According to one embodiment of the invention, there is provided a polyisocyanate composition comprising a polyisocyanate obtained by polymerizing the above-described isocyanate composition with a multifunctional alcohol-based compound. The polyisocyanate thus prepared by reaction with a polyfunctional alcohol exhibits excellent transparency as well as excellent tack and adhesion properties. Therefore, it can be used in coating agents, pressure-sensitive adhesives, adhesives, and the like, but is not limited thereto, and is particularly useful for manufacturing optical pressure-sensitive adhesives, optical adhesives, or optical coating agents.

Here, the description for the multi-functional alcohol-based compound can be applied identically as described above.

According to another embodiment of the invention, a polyisocyanate composition comprising a polyisocyanate in

which the above-described isocyanate composition and a multi-functional thiol-based compound or a multi-functional episulfide-based compound are polymerized is provided. The polyisocyanate composition can be used for an optical material, for example, an optical lens, but is not limited thereto.

Here, the description of the multifunctional thiol-based compounds and the multifunctional episulfide-based compounds can be applied in the same manner as described above.

In the polyisocyanate composition, the polymerization reaction between the isocyanate composition and the monomer compound (multi-functional alcohol-based compound, multi-functional thiol-based compound, multi-functional episulfide-based compound) may be performed under conditions of normal pressure and under an inert gas atmosphere such as nitrogen, argon, etc.

The polymerization reaction may be performed in a temperature range of -15°C or more, or 0°C or more, and 200°C or less, or 170°C or less. For example, when a multi-functional alcohol-based compound is used as the monomer compound, it is preferably performed at 60 to 80°C, and when a multi-functional thiol-based compound or a multi-functional episulfide-based compound is used as the monomer compound, it is preferably performed at 100 to 160°C.

When the polymerization reaction is performed in the above temperature range, the reaction rate can be easily controlled without concern about the occurrence of discoloration, and reaction efficiency can also be increased, which is preferable.

The polymerization reaction may be performed under non-catalytic conditions, or may be performed in the presence of a catalyst that typically promotes a urethanization reaction, such as a tin-based or amine-based catalyst. When performed in the presence of a catalyst, the catalyst may be added together in the step of adding the monomer compound to the isocyanate-based mixture.

The progress of the polymerization reaction can be predicted by measuring the concentration of isocyanate groups in the polymerization reactant by the n-dibutyl amine method using a potentiometric titration device, or by measuring the refractive index, and in the present invention, it can be performed until the concentration of isocyanate groups in the polymerization reactant reaches a calculated value of the isocyanate groups remaining after reacting with the monomer compound. As a result of the polymerization reaction as described above, a polyisocyanate is prepared.

The polyisocyanate composition may further comprise, as needed and within a range that does not diminish the intended effect of the invention, additives such as an internal release agent, an ultraviolet absorber, a polymerization initiator, a thermal stabilizer, a color correcting agent, a chain extender, a crosslinking agent, a light stabilizer, a filler, a photosensitizer, and the like. The amounts of these additives may be appropriately determined within a range that does not impair the discoloration and discoloration-suppression properties of the composition.

Article

According to another embodiment of the invention, an article is provided comprising a polymer obtained by polymerizing the above-described isocyanate composition with one or more multifunctional monomer compounds selected from multifunctional thiol-based compounds, multifunctional alcohol-based compounds, and multifunctional episulfide-based compounds. Such an article may also comprise a polymer synthesized by polymerizing the isocyanate composition and the multifunctional monomer compounds in the above-described polymerization composition.

A polyisocyanate composition exhibits excellent transparency along with excellent tack and adhesion properties, and accordingly can be applied to a wide range of fields. Specifically, it can be used as coating agents, pressure-sensitive adhesives, and adhesives, as well as optical materials. More preferably, the articles can serve as optical pressure-sensitive adhesives, optical adhesives, optical coating agents, or optical lenses. The articles may be manufactured by performing a molding process after the polymerization reaction in the above-described composition, or may be manufactured by a molding process using the polymerizable composition. In the latter case, the polymerization reaction occurs simultaneously during the molding process.

Preferably, when used as an optical lens, it may be a polymer obtained by polymerizing the isocyanate composition with a multifunctional thiol-based compound or a multifunctional episulfide-based compound. In this case, a polymerization composition comprising the isocyanate composition and the multifunctional thiol- or episulfide-based compound is injected into a lens mold, and the temperature of the mold is then raised to carry out a polymerization reaction between the isocyanate-based compound and the multifunctional monomer. At this stage, the mold is heated to a temperature range in which the urethane polymerization reaction occurs, and, after the reaction is complete, the resulting polymer-specifically polythiourethane-is removed from the mold to obtain the optical lens.

Hereinafter, preferred examples are presented to facilitate understanding of the present invention. However, the following embodiments are merely illustrative of the present invention, and it will be apparent to those skilled in the art that various changes and modifications may be made within the scope and technical spirit of the present invention. Such changes and modifications are also deemed to fall within the scope of the appended claims.

[Preparation Example: Preparation of isocyanate compound]

Preparation Example 1

Into a flask reactor, 471 g of 1,2-dichlorobenzene and 32.5 g of m-XDA having a purity of 99.4% were added, and stirred while injecting anhydrous hydrochloric acid at a rate of 20 g/hr at room temperature (23±5°C). The temperature rose to 50°C while injecting anhydrous hydrochloric acid. The salt formed after injection for 4 hours was cooled to room temperature, and 118 g of phosgene was added into the reactor, and then the reactor temperature was heated to reach 130°C. From the time of phosgene addition to the end of the reaction, a dry ice-acetone cooler was used to prevent phosgene from leaking to the outside. After the reactor temperature reached 130°C, the reactor temperature was maintained at 125~135°C for 2 hours so that the reaction solution became transparent. After the solution became transparent, the inside of the reactor was cooled to 80°C and cooled while blowing nitrogen. The solvent was removed from the reaction solution from which phosgene was removed through vacuum distillation, and the product was purified under reduced pressure at a high temperature of 160°C to obtain an isocyanate-based mixture comprising m-XDI. XDI obtained after the distillation process showed 99.8% by GC area %, and GPC oligomer showed 0.18 area%, APHA 10, Haze 0.3%. In the case of acidity (as HCl), there was a difference according to the distillation process, so XDI with low acidity was adjusted to an acidity of 150 ppm through anhydrous hydrochloric acid.

Here, GC Purity, GPC oligomer content, APHA, and Haze are the same as those measured in the following experimental examples.

In the case of acidity, potentiometric titration was performed on a sample with a 0.01N potassium hydroxide (KOH) methanol solution, and calculated according to Equation 1 below using the obtained measurement values.

[Equation 1]

acidity(as HCl)(ppm)=[(A-B) * N * f * 36.5 * 106] / (C * 103)

In Equation 1, A: volume (ml) of KOH methanol solution consumed for titration of the isocyanate composition sample

B: volume (ml) of KOH methanol solution consumed for blank titration
N: Normality of KOH methanol solution
f: a factor for correcting the normality of the KOH methanol solution used in measurement to be the same as that of the 0.01N KOH methanol solution when its normality deviates, measured according to ASTM D-1638, TOLOCHIMIE 04-01-68. For 0.01N KOH methanol solution, the f value is 1.
C: weight (g) of isocyanate composition sample

[Example 1 and Comparative Example 1: isocyanate composition]

Example 1-1

To 100 g of the isocyanate-based mixture comprising m-XDI purified and prepared in Preparation Example 1, 0.05 g of p-TSA (500 ppmw relative to m-XDI) as an aromatic sulfonamide-based antioxidant and 0.005 g of BHT (50 ppmw relative to m-XDI) as a phenolic antioxidant were added and mixed to manufacture an isocyanate composition.

Examples 1-2 to 1-7

Isocyanate compositions were each manufactured in the same manner as in Example 1-1, except that compounds described in Table 1 below were added in the described amounts as an antioxidant to the isocyanate-based mixture comprising m-XDI in Preparation Example 1.

Comparative Example 1-1

An antioxidant was not separately added, and the isocyanate-based mixture comprising m-XDI prepared in Preparation Example 1 was used as it is.

Comparative Examples 1-2 to 1-10

Isocyanate compositions were each manufactured in the same manner as in Example 1-1, except that compounds described in Table 1 below were added in the described amounts as an antioxidant to the isocyanate-based mixture comprising m-XDI in Preparation Example 1.

[Table 1]

| Classification | Type of antioxidant | Antioxidant input amount (ppmw*) |
|---|---|---|
| Example 1-1 | p-TSA/BHT | 500/50 |
| Example 1-2 | p-TSA/IRGANOX 1076 | 500/50 |
| Example 1-3 | p-TSA/BHT | 2000/30 |
| Example 1-4 | p-TSA/IRGANOX 1076 | 1000/30 |
| Example 1-5 | Benzenesulfonamide/IRGANOX 1076 | 50/100 |
| Example 1-6 | p-TSA/Phenol | 500/1000 |
| Example 1-7 | p-TSA/Phenol/BHT | 250/500/30 |
| Comparative Example 1-1 | - | - |
| Comparative Example 1-2 | BHT | 50 |
| Comparative Example 1-3 | p-TSA | 500 |
| Comparative Example 1-4 | IRGANOX 1076 | 50 |
| Comparative Example 1-5 | Phenol | 500 |
| Comparative Example 1-6 | N,N-Dimethyl methanesulfonamide/IRGANOX 1076 | 500/50 |
| Comparative Example 1-7 | Tributylphophite/IRGANOX 1076 | 100/50 |
| Comparative Example 1-8 | Phenol/BHT | 500/50 |
| Comparative Example 1-9 | p-TSI | 1000 |
| Comparative Example 1-10 | p-TSI/BHT | 500/50 |
| *relative to m-XDI content<br>IRGANOX 1076 (manufactured by BASF): Octadecyl-3-(3,5-di-tert-butyl-4-hydroxyphenyl) propionateBHT: Butylated Hydroxytoluene<br>p-TSA: para toluene sulfonamide<br>p-TSI: para toluenesulfonyl isocyanate | | |

[Experimental Example 1]

The isocyanate compositions prepared in the Examples and Comparative Examples were charged into tinplate steel containers, purged with nitrogen, and stored at 15 °C for six months. The resulting samples were then evaluated for cloudiness, purity, oligomer content, and acidity according to the following methods, and the results are shown in Table 2 below.

(1) Evaluation of occurrence of clouding

For the samples of the isocyanate compositions prepared in the Examples and Comparative Examples that had been stored in a metal container for 6 months, APHA was measured according to ASTM D1209 using HunterLab's UltraScan Pro and haze was measured according to ASTM D1003, and the results are shown in Table 2 below.

<APHA · Haze analysis conditions>

Colorimeter: Ultrascan Pro
Light source: C/2
Cell: 10mm quartz

The initial haze value of m-XDI is 0.3, which refers to the m-XDI prepared in Preparation Example 1. The larger the change in the haze value, the greater the extent of cloudiness that can be evaluated. In addition, a smaller APHA value

indicates superior resistance to discoloration.

(2) Gel permeation chromatography (GPC) analysis

For the samples in which the isocyanate compositions prepared in the Examples and Comparative Examples were stored in a metal container for 6 months, GPC Oligomer content was measured using gel permeation chromatography, and the results are shown in Table 2 below.

<GPC analysis conditions>

Equipment used: Agilent
Columns: Agilent PL Mixed D, Agilent PLgel 100Å, Agilent PLgel 50Å
Sample concentration: 1wt/vol% in tetrahydrofuran (THF) Carrier: THF
Detection method: RI
Flow rate: 1.0 ml/min
Column temperature: 25 °C

A polystyrene standard form having a molecular weight of 104 to 24,600 g/mol was used when preparing a calibration curve.

[Example 2 and Comparative Example 2: optical lenses]

Example 2-1

20.8 g of the isocyanate composition prepared in Example 1-1, 0.04 g of zelec UN (manufactured by Stepan), and 0.04 g of biosorb 583 (manufactured by Sakai Chemical Industry Co., Ltd.) were mixed by stirring in a flask at room temperature for about 20 minutes to prepare a polyisocyanate. After visually confirming that all components were well mixed in the polyisocyanate, 0.002 g of dibutyltin chloride was added and mixed by stirring for 10 minutes.

19.2 g of 2,3-bis(2-sulfanyl ethyl sulfanyl)propane-1-thiol was added to the mixture, and stirred for 1 hour while degassing under 5 mbar conditions to prepare a polyisocyanate composition.

After the polyisocyanate composition was filtered through a 1μm PTFE filter, it was injected into a mold die consisting of a glass mold and tape. This mold die was put into an oven, and the temperature was gradually increased from 10°C to 120°C for 20 hours, and further maintained at 120°C for 2 hours to perform a polymerization reaction. After completion of polymerization, the mold die was taken out of the oven and released to obtain a plastic lens. The obtained plastic lens was annealed at 120°C for 6 hours to manufacture a final optical lens sample.

Examples 2-2 to 2-7 and Comparative Examples 2-1 to 2-8

Optical lens samples were manufactured in the same manner as in Example 2-1, except that the isocyanate compositions of Examples 1-2 to 1-7 and Comparative Examples 2-1 to 2-8 were used instead of the isocyanate composition prepared in Example 1-1.

[Experimental Example 2]

For the optical lenses prepared in the Examples and Comparative Examples, YI was measured by the following method according to ASTM E313 using Ultrascan Pro, HunterLab, and the results are shown in Table 2 below.

<Lens YI measurement method>

Equipment: Ultrascan Pro, HunterLab

Light source: D65/10

[Table 2]

| Isocyanate composition | APHA | Haze (%) | GPC Oligomer (area %) | Optical lens | Lens YI |
|---|---|---|---|---|---|
| Example 1-1 | 15 | 0.5 | 0.7 | Example 2-1 | 1.8 |
| Example 1-2 | 17 | 0.6 | 0.8 | Example 2-2 | 1.8 |
| Example 1-3 | 11 | 0.4 | 1.1 | Example 2-3 | 1.6 |
| Example 1-4 | 13 | 0.5 | 1.2 | Example 2-4 | 1.8 |
| Example 1-5 | 13 | 0.7 | 1.0 | Example 2-5 | 1.7 |
| Example 1-6 | 13 | 0.4 | 1.1 | Example 2-6 | 1.6 |
| Example 1-7 | 16 | 0.4 | 0.7 | Example 2-7 | 1.7 |
| Comparative Example 1-1 | 25 | 46 | X | Comparative Example 2-1 | X |
| Comparative Example 1-2 | 32 | 3.5 | 1.2 | Comparative Example 2-2 | X |
| Comparative Example 1-3 | 30 | 1.3 | 2.8 | Comparative Example 2-3 | 1.8 |
| Comparative Example 1-4 | 29 | 12 | X | Comparative Example 2-4 | X |
| Comparative Example 1-5 | 23 | 2.7 | 3.1 | Comparative Example 2-5 | 1.8 |
| Comparative Example 1-6 | 32 | 3.5 | 4.8 | Comparative Example 2-6 | X |
| Comparative Example 1-7 | 22 | 9.9 | X | Comparative Example 2-7 | X |
| Comparative Example 1-8 | 24 | 3.5 | 1.6 | Comparative Example 2-8 | X |
| Comparative Example 1-9 | 38 | 6.5 | 2.3 | Comparative Example 2-9 | X |
| Comparative Example 1-10 | 42 | 22 | X | Comparative Example 2-10 | X |

As can be seen from Table 2, it could be confirmed that the isocyanate composition according to the present invention suppresses discoloration and clouding even when stored in a metal container for a long period of time by using an aromatic sulfonamide-based antioxidant of a specific structure and a phenolic antioxidant together, and at the same time, has high purity and low oligomer content. In particular, in the case of the Examples, it was confirmed that they have relatively low APHA values and there is no significant change compared to the Haze value of the initial m-XDI composition.

Comparative Example 1 used the isocyanate-based mixture comprising m-XDI prepared in Preparation Example 1 as it is without adding a separate antioxidant, and the composition itself had a high acidity of 150 ppm, and accordingly, it was confirmed that during long-term storage, the APHA value was large and the Haze value significantly increased, so that the storage stability significantly decreased.

In addition, in the case of Comparative Examples 2 to 8, which used only some of the two types of antioxidants of the present invention or used them in combination with other components, it was confirmed that they exhibited significantly lowered physical properties compared to the Examples, and could not simultaneously solve the problems of occurrence of clouding and formation of oligomers.

For samples with a Haze of 3.0 or more, clouding was confirmed even with the naked eye, so lens manufacture was not performed, and for Haze of 9 or more, the clouding was very severe, so GPC measurement was not performed.

In addition, it was confirmed that the optical lens manufactured using the isocyanate composition according to the present invention has a relatively low value of YI and has excellent transparency.

## Claims

1. An isocyanate composition comprising: an isocyanate-based compound; an aromatic sulfonamide-based antioxidant represented by the following Formula 1; and a phenolic antioxidant:

[Chemical Formula 1]

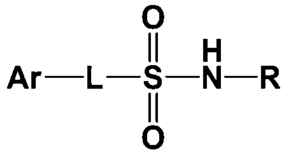

In Chemical Formula 1, L is a single bond or a substituted or unsubstituted $C_{1-20}$ alkylene, Ar is a substituted or unsubstituted $C_{6-60}$ aryl, and R is hydrogen, deuterium, a substituted or unsubstituted $C_{1-60}$ alkyl, a substituted or unsubstituted $C_{1-60}$ alkenyl, a substituted or unsubstituted $C_{3-60}$ cycloalkyl, a substituted or unsubstituted $C_{6-60}$ aryl, a substituted or unsubstituted benzyl, a substituted or unsubstituted $C_{1-60}$ alkylcarbamoyl, or a substituted or unsubstituted $C_{1-60}$ alkoxycarbonyl.

**2.** The isocyanate composition according to Claim 1, wherein Ar is phenyl, biphenylyl, terphenylyl, naphthyl, anthracenyl, phenanthrenyl, pyrenyl, diphenylfluorenyl, or dimethylfluorenyl, each of which is unsubstituted or substituted with $C_{1-10}$ alkyl, acetyl, amino, or acetamido.

**3.** The isocyanate composition according to Claim 1, wherein L is a single bond or $C_{1-10}$ alkylene.

**4.** The isocyanate composition according to Claim 1, wherein R is hydrogen, deuterium, $C_{1-10}$ alkyl, $C_{3-30}$ cycloalkyl, $C_{1-10}$ alkylcarbamoyl, $C_{1-10}$ alkoxycarbonyl, benzyl, or allyl.

**5.** The isocyanate composition according to Claim 1, wherein the aromatic sulfonamide-based antioxidant comprises at least one selected from the group consisting of benzenesulfonamide, p-toluenesulfonamide, o-toluenesulfonamide, N-methyl-p-toluenesulfonamide, N-ethyl-p-toluenesulfonamide, N-butyl-p-toluenesulfonamide, N-benzyl-p-toluenesulfonamide, N-cyclohexyl-p-toluenesulfonamide, N-allyl-p-toluenesulfonamide, N-(tert-butoxycarbonyl)-p-toluenesulfonamide, naphthalene-1-sulfonamide, naphthalene-2-sulfonamide, 4-acetamidobenzenesulfonamide, benzylsulfonamide, 4-acetylbenzenesulfonamide, and 3-aminobenzenesulfonamide.

**6.** The isocyanate composition according to Claim 1, wherein the aromatic sulfonamide-based antioxidant is present in an amount of 10 to 3,000 ppmw based on the total weight of the isocyanate-based compound.

**7.** The isocyanate composition according to Claim 1, wherein the phenolic antioxidant comprises at least one selected from the group consisting of phenol, 4-methoxyphenol, dibutylhydroxytoluene (BHT), 2-tert-butyl-4-methoxyphenol, 3-tert-butyl-4-methoxyphenol, 4-tert-butylbenzene-1,2-diol, propyl-3,4,5-trihydroxybenzoate, 3,5-di-tert-butyl-4-hydroxyphenylpropionate, 2-tert-butylbenzene-1,4-diol, 2,5-di-tert-butylbenzene-1,4-diol, octadecyl-3-[3,5-di-tert-butyl-4-hydroxyphenyl]propionate, 2-[1-(2-hydroxy-3,5-di-tert-pentylphenyl)ethyl]-4,6-di-tert-pentylphenyl acrylate, and 6-[3-(3-tert-butyl-4-hydroxy-5-methylphenyl)propoxy]-2,4,8,10-tetra-tert-butyldibenzo[d,f][1,3,2]dioxaphosphepin.

**8.** The isocyanate composition according to Claim 1, wherein the phenolic antioxidant is present in an amount of 10 to 2,000 ppmw based on the total weight of the isocyanate-based compounds.

**9.** The isocyanate composition according to Claim 1, wherein the isocyanate-based compound comprises at least one selected from the group consisting of para-phenylene diisocyanate, tolylene diisocyanate, naphthalene diisocyanate, 4,4'-diphenylmethane diisocyanate, 2,4'-diphenylmethane diisocyanate, tolidine diisocyanate, tetramethylene diisocyanate, hexamethylene diisocyanate, trimethylhexamethylene diisocyanate, lysine diisocyanate, norbornene diisocyanate, octadecyl diisocyanate, trans-cyclohexane-1,4-diisocyanate, isophorone diisocyanate, dicyclohexylmethane diisocyanate, xylylene diisocyanate, hydrogenated xylylene diisocyanate, tetramethylxylylene diisocyanate, and modified isocyanates thereof.

**10.** The isocyanate composition according to Claim 1, wherein the isocyanate-based compound is xylylene diisocyanate.

**11.** The isocyanate composition according to Claim 1, wherein the isocyanate composition has a haze value of 0.9 or less measured after storage in a metal container for 6 months.

**12.** A metal container for storing an isocyanate composition, comprising the isocyanate composition according to any one

of Claims 1 to 11.

**13.** A composition for polyisocyanate polymerization comprising the isocyanate composition according to any one of Claims 1 to 11; and
one or more multi-functional monomer compounds selected from multi-functional thiol-based compounds, multi-functional alcohol-based compounds, and multi-functional episulfide-based compounds."

**14.** A polyisocyanate composition comprising a polyisocyanate obtained by polymerizing the isocyanate composition according to any one of Claims 1 to 11 with a multifunctional alcohol-based compound.

**15.** A polyisocyanate composition comprising a polyisocyanate obtained by polymerizing the isocyanate composition according to any one of Claims 1 to 11 with a multifunctional thiol-based compound or a multifunctional episulfide-based compound.

**16.** An article comprising a polymer obtained by polymerizing the isocyanate composition according to any one of Claims 1 to 11 with one or more multifunctional monomer compounds selected from multifunctional thiol compounds, multifunctional alcohol compounds, and multifunctional episulfide compounds.

**17.** The article according to Claim 16, wherein the article is an optical pressure-sensitive adhesive, an optical adhesive, an optical coating agent, or an optical lens.

## INTERNATIONAL SEARCH REPORT

International application No.
**PCT/KR2024/012523**

### A. CLASSIFICATION OF SUBJECT MATTER

**C07C 263/18**(2006.01)i; **C07C 265/14**(2006.01)i; **B65D 6/00**(2006.01)i; **C08G 18/76**(2006.01)i; **G02B 1/04**(2006.01)i; **C08G 18/08**(2006.01)i; **C08G 18/72**(2006.01)i; **C08K 5/435**(2006.01)i

According to International Patent Classification (IPC) or to both national classification and IPC

### B. FIELDS SEARCHED

Minimum documentation searched (classification system followed by classification symbols)

C07C 263/18(2006.01); C07C 263/10(2006.01); C07C 265/14(2006.01); C07C 311/65(2006.01); C08G 18/08(2006.01); C08G 18/09(2006.01); C08G 18/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 이소시아네이트(isocyanate), 산화방지제(antioxidant), 방향족 술폰아미드(aromatic sulfonamide), 페놀(phenol), 중합(polymerization), 금속 용기(metal container)

### C. DOCUMENTS CONSIDERED TO BE RELEVANT

| Category* | Citation of document, with indication, where appropriate, of the relevant passages | Relevant to claim No. |
|---|---|---|
| X | KR 10-2015-0038648 A (MITSUI CHEMICALS, INC.) 08 April 2015 (2015-04-08)<br>See claims 1 and 2; paragraphs [0242]-[0244], [0249], [0254], [0255], [0258], [0276], [0285]-[0289], [0318], [0466], [0467], [0474] and [0754]; and table 3. | 1-17 |
| A | CN 115073323 A (INSTITUTE OF PROCESS ENGINEERING, CHINESE ACADEMY OF SCIENCES) 20 September 2022 (2022-09-20)<br>See claims 1-6. | 1-17 |
| A | KR 10-2021-0023483 A (HANWHA SOLUTIONS CORPORATION) 04 March 2021 (2021-03-04)<br>See claims 1, 4, 8 and 14-16; and paragraphs [0035]-[0037] and [0041]. | 1-17 |
| A | KR 10-0166652 B1 (KUMHO MITSUI CHEMICALS, INC.) 20 March 1999 (1999-03-20)<br>See claims 1 and 2; page 2; and example 1. | 1-17 |
| A | KR 10-2023-0081352 A (HANWHA SOLUTIONS CORPORATION) 07 June 2023 (2023-06-07)<br>See claims 1, 6, 12 and 13; and paragraph [0011]. | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2024** | **11 December 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/012523**

| Patent document cited in search report | Publication date (day/month/year) | Patent family member(s) | Publication date (day/month/year) |
|---|---|---|---|
| KR 10-2015-0038648 A | 08 April 2015 | BR 112013023020 A2 | 13 June 2017 |
| | | CN 103347852 A | 09 October 2013 |
| | | CN 103347852 B | 13 April 2016 |
| | | EP 2684867 A1 | 15 January 2014 |
| | | EP 2684867 B1 | 02 January 2019 |
| | | EP 3486230 A1 | 22 May 2019 |
| | | ES 2714299 T3 | 28 May 2019 |
| | | HK 1186171 A1 | 07 March 2014 |
| | | JP 5849088 B2 | 27 January 2016 |
| | | KR 10-1544296 B1 | 13 August 2015 |
| | | KR 10-1604961 B1 | 18 March 2016 |
| | | KR 10-2013-0127504 A | 22 November 2013 |
| | | MY 163292 A | 15 September 2017 |
| | | PT 2684867 T | 07 February 2019 |
| | | TW 201302680 A | 16 January 2013 |
| | | TW I560173 B | 01 December 2016 |
| | | US 2013-0338330 A1 | 19 December 2013 |
| | | US 2016-0083503 A1 | 24 March 2016 |
| | | US 2016-0090368 A1 | 31 March 2016 |
| | | US 9234069 B2 | 12 January 2016 |
| | | US 9371413 B2 | 21 June 2016 |
| | | US 9376404 B2 | 28 June 2016 |
| | | WO 2012-121291 A1 | 13 September 2012 |
| CN 115073323 A | 20 September 2022 | None | |
| KR 10-2021-0023483 A | 04 March 2021 | CN 114269805 A | 01 April 2022 |
| | | EP 4019564 A1 | 29 June 2022 |
| | | JP 2022-546351 A | 04 November 2022 |
| | | JP 7383130 B2 | 17 November 2023 |
| | | KR 10-2710406 B1 | 25 September 2024 |
| | | TW 202112862 A | 01 April 2021 |
| | | TW I782315 B | 01 November 2022 |
| | | US 2022-0306835 A1 | 29 September 2022 |
| | | WO 2021-040316 A1 | 04 March 2021 |
| KR 10-0166652 B1 | 20 March 1999 | KR 10-1996-0041151 A | 19 December 1996 |
| KR 10-2023-0081352 A | 07 June 2023 | CN 118317988 A | 09 July 2024 |
| | | CN 118317991 A | 09 July 2024 |
| | | EP 4442723 A1 | 09 October 2024 |
| | | EP 4442725 A1 | 09 October 2024 |
| | | JP 2024-542656 A | 15 November 2024 |
| | | KR 10-2024-0053365 A | 24 April 2024 |
| | | TW 202330464 A | 01 August 2023 |
| | | TW 202330690 A | 01 August 2023 |
| | | TW I843308 B | 21 May 2024 |
| | | TW I847398 B | 01 July 2024 |
| | | WO 2023-101379 A1 | 08 June 2023 |
| | | WO 2023-101404 A1 | 08 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230110696
- KR 1020240112100
- KR 1020220054849